# EUROPEAN PATENT SPECIFICATION

(11) **EP 3 480 090 B1**
(45) Date of publication and mention of the grant of the patent: **21.10.2020**
(21) Application number: 18204172.3
(22) Date of filing: 02.11.2018
(51) Int. Cl.: B62J 1/02, F21S 45/47

(54) **LED LIGHTING UNIT FOR A STRADDLE TYPE VEHICLE**
LED-BELEUCHTUNGSEINHEIT FÜR EIN GRÄTSCHSITZFAHRZEUG
UNITÉ D'ÉCLAIRAGE LED POUR UN VÉHICULE DE TYPE À ENFOURCHER

(30) Priority: 02.11.2017 IT 201700124882
(43) Date of publication of application: 08.05.2019
(73) Proprietor: YAMAHA MOTOR CO., LTD., Iwata-shi Shizuoka 438-8501 (JP)
(72) Inventor: SPINELLI, Carlo, SHIZUOKA, 438-8501 (JP); SARTI, Stefano, SHIZUOKA, 438-8501 (JP)
(74) Representative: Di Sciuva, Michele

(56) References cited:
- EP-A1- 2 583 884
- EP-A1- 2 682 331
- JP-A- 2013 067 339
- JP-A- 2014 065 340

## Description

### CROSS-REFERENCE TO RELATED APPLICATIONS

This application claims priority from Italian Patent Application No. 102017000124882 filed on 02/11/2017.

### TECHNICAL FIELD

The present invention relates to a straddle type vehicle, in particular a motorcycle.

The present invention also relates to a method of updating a straddle type vehicle, in particular a motorcycle.

### BACKGROUND ART

Motorcycles are known comprising a body, a front wheel and a rear wheel which are operatively connected to the body.

Motorcycles are also known comprising one rear wheel and two front wheels, or one front wheel and two rear wheels, or two front and two rear wheels.

Furthermore, motorcycle are also known with two front or rear wheels, which are mounted in such a way to be leaning with respect to the body.

The known motorcycle also comprises a front portion fixed to the body and a steering system articulated with respect to the front portion and connected to the front wheels.

Furthermore, the front portion comprises a lighting unit.

LED lighting unit are known using light emitting diodes as a light source.

The known LED lighting unit substantially comprises:
- a frame for attachment to the front portion of the motorcycle; and
- a headlight.

The headlight comprises, in turn,:
- a transparent member fixed to the frame;
- a plurality of LED light sources rearward arranged with respect to the transparent member, according to the advancing direction of the motorcycle; and
- a plurality of cooling fins, which are arranged rearward with respect to the LED light sources.

The cooling fins are aimed to dissipate the considerable heat amount, which is generated by the operation of the LED light sources.

A need is felt within the industry to further enhance the heat dissipation, in order to accordingly increase the life-time of the LED light sources.

### DISCLOSURE OF INVENTION

It is an object of the present invention to provide a straddle-type vehicle.

JP-A-2013067339, JP-A-2014065340 and US-A-2007/091632 disclose a straddle type vehicle according to the preamble of claim 1.

In particular, JP-A-2013067339 discloses a vehicular cooling structure mounting led light. The cooling structure includes: a substrate for supporting the LED light source; a light unit that is connected with the substrate and has a cooling means for cooling the substrate; an exterior component for covering the light unit; and a control unit that separate from the light unit and controls the light unit. The light unit and the control unit are arranged in the exterior component. The exterior component includes an air guiding passage that guides a traveling wind from the front part of the exterior component into the exterior component in a vehicle proceeding direction, and discharges the guided traveling wind from the rear part of the exterior component. The control unit is arranged in the upper stream rather than the cooling means of the light unit in the air guiding passage.

This object is achieved by a straddle type vehicle, in particular a motorcycle, as claimed in claim 1.

The present invention also relates to a method of updating a straddle type vehicle, in particular a motorcycle, as claimed in claim 10.

### BRIEF DESCRIPTION OF THE DRAWINGS

One preferred, non-limiting embodiment of the present invention will be described by way of example with reference to the accompanying drawings, in which:
- Figure 1 is a lateral view of a motorcycle according to the present invention comprising a led lighting unit according to the present invention;
- Figure 2 is a perspective view of the led lighting unit of Figure 1;
- Figure 3 is a front view of the led lighting unit of Figures 1 and 2;
- Figure 4 is a perspective rear view of the led lighting unit of Figures 2 and 3;
- Figure 5 is a rear view of the led lighting unit of Figures 2 to 4;
- Figure 6 is a front view of the led lighting unit of Figures 1 to 5, with parts removed for clarity;
- Figure 7 is a section taken along line VII-VII of Figure 5;
- Figure 8 is a section taken along line VIII-VIII of Figure 5; and
- Figure 9 is an exploded view of the led lighting unit of Figures 1 to 8.

### BEST MODE FOR CARRYING OUT THE INVENTION

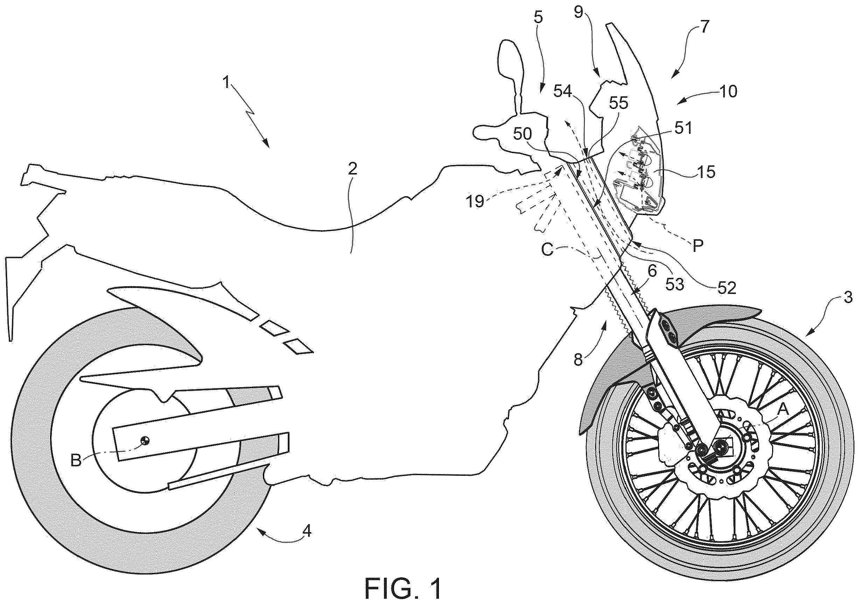

With reference to Figure 1, numeral 1 indicates a motorcycle.

In the following of the present description, expressions like "front", "rear", "top" and "bottom" are used with reference to a normal advancing direction and operative position of motorcycle 1 shown in the attached Figures.

In the embodiment shown, motorcycle 1 is a so-called "dual sport" motorcycle, i.e. a motorcycle which can be driven either off-road or on-road.

Motorcycle 1 substantially comprises:
- a body 2 comprising a head tube 19; and
- a front fork 8, which is rotatably supported by head tube 19.

Front fork 8 includes a pair of right and left forks 6 which are recalled in the present description as "forks 6".

Motorcycle 1 further comprises:
- a steering mechanism 5 which rotatably supports a front wheel 3 and is operatively connected to a not shown handlebar which can be steered with respect to body 2; and
- a front wheel 3 and a rear wheel 4.

Front wheel 3 is supported by a lower portion of front fork 8. Specifically, front wheel 3 and rear wheel 4 are rotatable about respective axes A, B.

In the embodiment shown, rear wheel 4 is a driving wheel and front wheel 3 is a driven wheel.

The handlebar is supported by an upper portion of front fork 17.

In greater detail, steering mechanism 5 is shown limitedly to head tube 19 and forks 6 extending along respective axes C parallel to one another and transversal to axis A.

In the embodiment shown, forks 6 straddle front wheel 3.

Motorcycle 1 also comprises a front portion 7 fixed to body 2.

Front portion 7 comprises:
- a led lighting unit 10; and
- a support structure 9 for supporting additional devices of motorcycle 1 and connected to body 2.

Support structure 9 is interposed between steering mechanism 5 and led lighting unit 10.

Still more precisely, support structure 9 is arranged rearward with respect to lighting unit 10 and forward with respect steering mechanism 5.

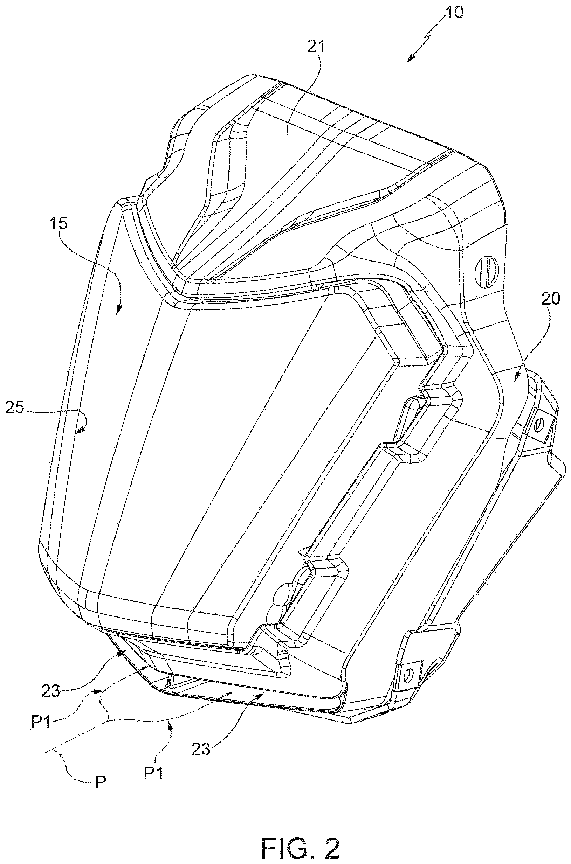

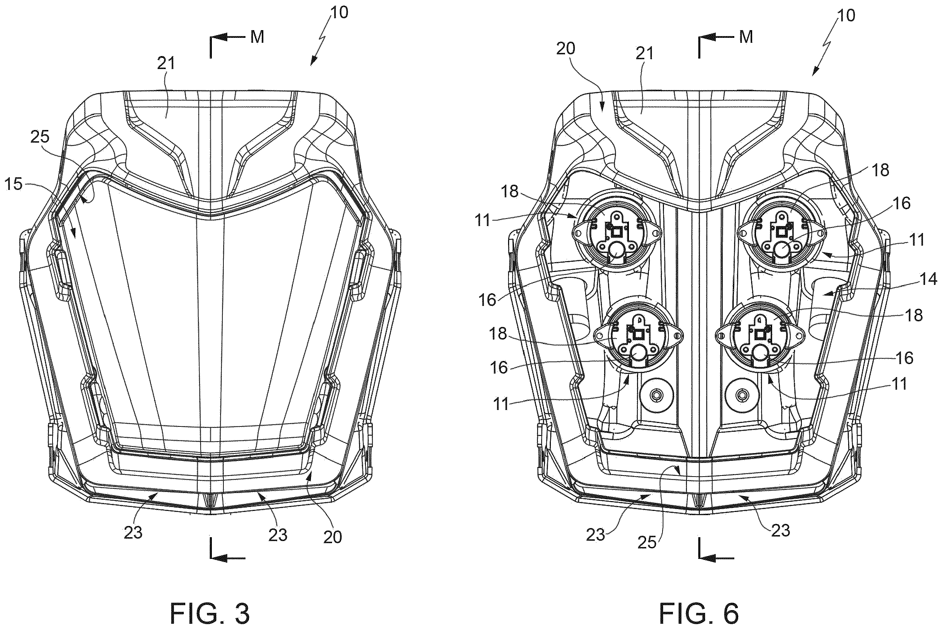

With reference to Figures 2 to 9, led lighting unit 10 substantially comprises:
- a frame 20 which is fixed to body 2, in particular to support structure 9;
- a headlight 14 (Figure 6) housed inside frame 20 in a tight-fluid manner and comprising a plurality, four in the embodiment shown, of LED light sources 11; and
- a transparent element 15 which covers headlight 14 on the front side and is connected to frame 8.

Preferably, each light source 11 comprises (see Figure 6 from which transparent 15 has been removed), in turn, a respective bulb 16 and a respective lens 18.

Furthermore, headlight 14 comprises a plurality of groups 12 of cooling fins 13 connected to respective light sources 11 and arranged rearward with respect to respective light sources 11.

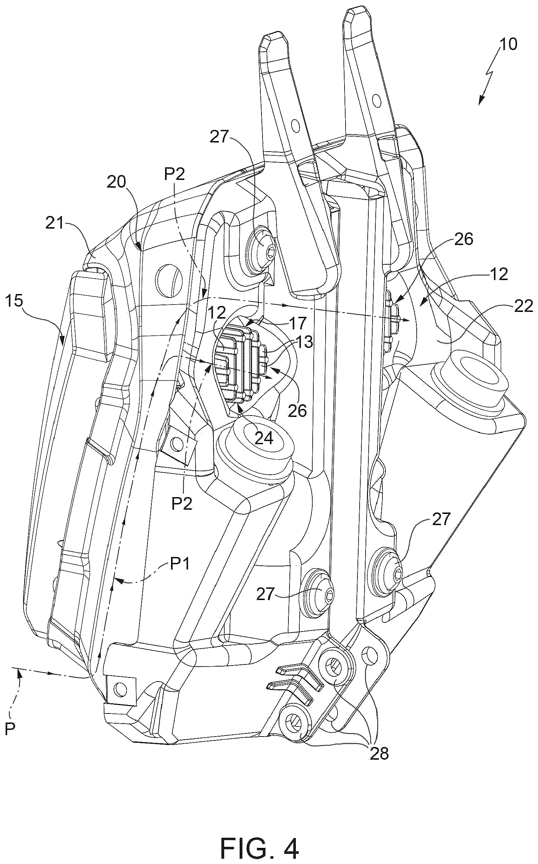

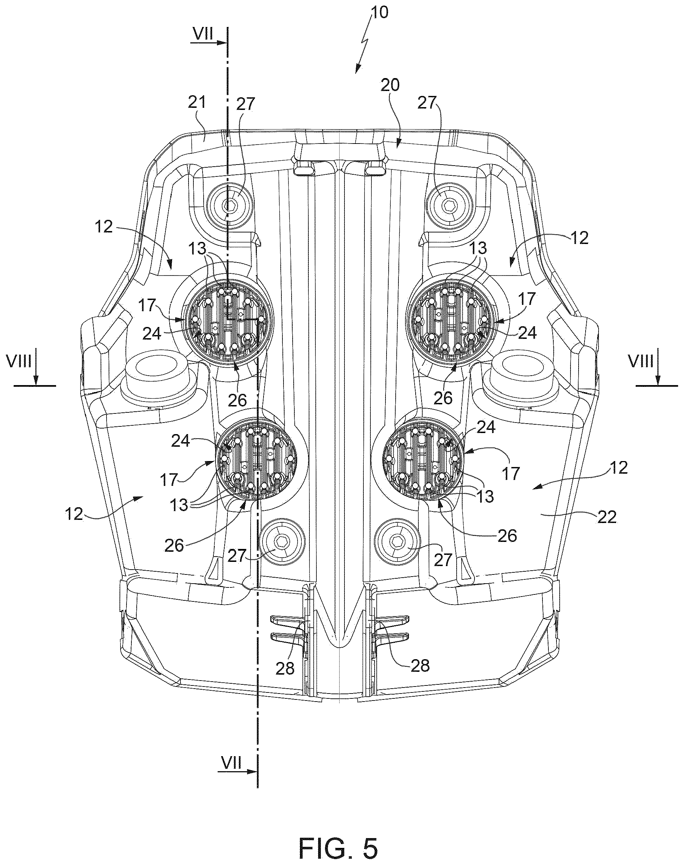

Preferably, each group 12 comprise a plurality of fins 13 extending parallel to one another and arranged in such a way to define a substantially annular contour 17 (Figures 4 and 5).

In particular, fins 13 have a progressive decreasing height, moving from a center of contour 17 towards contour 17 itself.

Cooling fins 13 are adapted to dissipate the amount of heat generated by the operation of light sources 11.

A conveying path P is defined a vane 25 between frame 20 and headlight 14, and is open towards the outside of led lighting unit 10 and is thermally coupled with fins 13, so as to convey an air cooling flow from the outside of led lighting unit 10 towards fins 13.

Accordingly, the air cooling flow enhances the heat flux dissipated by fins 13.

In greater detail, conveying path P comprises (Figures 5, 7 and 8) a pair of front inlets 23, a plurality of rear outlets 24, and a vane 25 interposed between front inlets 23 and rear outlets 24 and in fluid connection with front inlets 23 and rear outlets 24.

In particular, rear outlets 24 are open towards and face support structure 9 and steering mechanism 5.

Still more precisely, conveying path P comprises (Figures 5, 7 and 8):
- a pair of inlet portions P1 which upwards flow as of inlets 23; and
- a plurality of outlet portions P2, which separate from inlet portion P1 inside vane 25, partially upwards move inside vane 25 and exit from led lighting unit 10 by means of outlets 24.

It should be considered that the above indication refer to a main direction flow of air flow along conveying path P.

It is important to point out that, when motorcycle 1 moves forward according to a normal advancement direction, a dynamic overpressure is present in the region immediately forward with respect to inlets 23 while a dynamic depression is present in the region immediately rearward with respect to rear outlets 24.

Accordingly, the air cooling flow is conveyed from front inlets 23 inside vane 25 and, then, towards rear outlets 24, as motorcycle 1 moves forward.

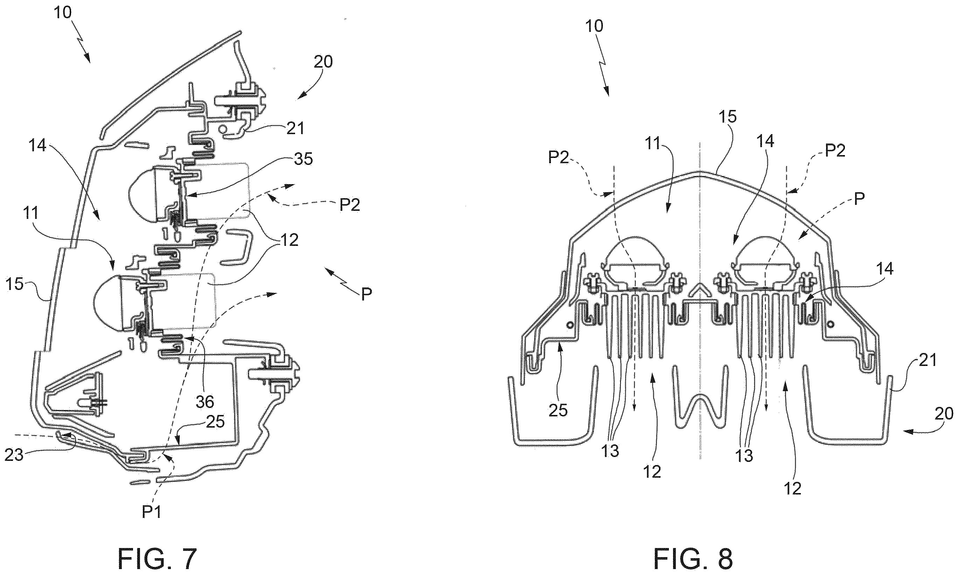

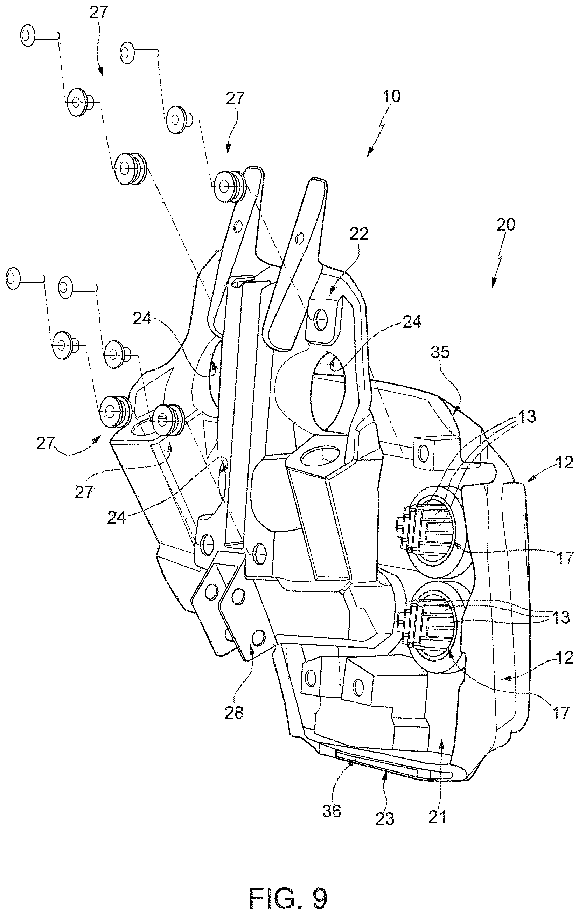

Preferably, headlight 14 comprises (Figures 7 and 9): a rear part 35 from which fins 13 protrudes; and a lower part 36 which define inlets 23.

Frame 20 is shaped so as to cover rear part 35 and lower part 36 of headlight 14.

Frame 20 comprises, in turn,:
- a front cover 21 which surrounds transparent element 15; and
- a rear cover 22.

In the embodiment shown, front cover 21 is formed integral with transparent element 15 and headlight 14.

Headlight 14 is connected to rear cover 22 by means of releasable connecting means 27 (Figures 5 and 6), which are arranged at the top and at the bottom of groups 12.

Rear cover 22 is connected to support structure 9 by means of releasable connecting means 28 arranged at the bottom of groups 12.

Furthermore, front cover 21 defines an opening engaged by transparent element 15 and is folded towards rear cover 22, so as to surround headlight 14.

Front cover 21 and transparent element 15 have a common mid-plane M.

Front cover 21 also defines front inlets 23.

In the embodiment shown, front inlets 23 are arranged below transparent element 15 of headlight 14. Front inlets 23 extends on the opposite side of mid plane M and are elongated transversally to mid plane M. Furthermore, front inlets 23 converge towards mid plane M.

Preferably, vane 25 is defined between front cover 21 and rear cover 22, and tight-fluidly houses headlight 14.

Furthermore, vane 25 houses light sources 11 and is bound on the front side by front cover 21 and transparent element 15 and on the rear side by rear cover 22.

Rear cover 22 is passed through by at least part of groups 12 of fins 13.

In other words, fins 13 of each group 12 protrude from respective light sources 11 beyond rear cover 22 and towards support structure 9.

Furthermore, rear cover 22 defines rear outlets 24 for respective groups 12 of fins 13.

Rear outlets 24 are circularly shaped and are engaged with relative annular gaps 26 by relative groups 12 (Figure 5) .

Furthermore, motorcycle 1 comprises (Figure 1) a body 50 which covers at least in part steering mechanism 5 and is arranged forward with respect to steering mechanism 5.

Still more precisely, body 50 is interposed between steering mechanism 5 and led lighting unit 10.

Furthermore, motorcycle 1 comprises an air flow passage 51, which is formed at front portion 7. Air flow passage 51 is defined between body 50 and led lighting unit 10. In the embodiment shown, air flow passage 51 has a main extension direction, which is transversal to the advancing direction of motorcycle 1.

Air flow passage 51 is passed through by the air flow generated by the advancement of the motorcycle 1.

Air flow passage 51 comprises, in greater detail:
- an inlet 52 mounted at the bottom part 53 of front portion 7; and
- an outlet 54 mounted at the top part 55 of front portion 7.

Inlet 52 is arranged at front fender 56 of front wheel 3.

The cross section of inlet 52 is smaller than the cross section of outlet 54.

The operation of led lighting unit 10 is described with reference to a condition in which motorcycle 1 moves forward according to the normal advancement direction and lighting sources 14 are switched on.

In this condition, a dynamic overpressure is present in the region immediately forward with respect to front inlets 23 while a dynamic depression is present in the region immediately rearward with respect to rear outlets 24.

Consequently, the air cooling flow is generated along path P and in particular, from front inlets 23 to vane 25 and from vane 25 towards rear outlets 24. More precisely, the air cooling flow flows along the rear side of headlight 14.

The air cooling flow moves away from vane 25 towards annular passages 26 and laps fins 13 of respective groups 12, thus strongly increasing the amount of heat dissipated by fins 13 and accordingly reducing the actual temperature of lighting sources 11.

Furthermore, thanks to the dynamic underpressure present in the region immediately rearward with respect to rear outlets 24, an additional air flow is generated inside air flow passage 51, in particular from smaller inlet section 52 towards larger outlet 54.

The difference in cross-section between inlet 52 and outlet 54 reduces the speed of the air flow flowing inside air flow passage 51.

Furthermore, the air flow flowing inside air flow passage 51 improves the effectiveness of the cooling of led lighting unit 10.

The advantages of motorcycle 1 according to the present invention will be clear from the above description.

In particular, conveying path P is defined by vane 25 between frame 20 and headlight 14, is open towards the outside of led lighting unit 10 and is thermally coupled with fins 13, so as to convey a cooling flow from the outside of unit 10 towards fins 13.

In this way, the amount of heat dissipated by fins 13 is strongly enhanced with respect to the known solution described in the introductory part of the description.

Accordingly, the actual operative temperature of lighting sources 14 is reduced and the life-time of lighting sources 14 is increased.

The cooling efficiency of fins 13 is further enhanced by the air flow, which passes through air flow passage 51 in the region interposed between cover 50 and led lighting unit 10.

Furthermore, being the cross section of inlet 52 larger than the cross section of outlet 54, the air flow is slowed down inside air flow passage 51 as it moves from inlet 52 to outlet 54, thus further enhancing the cooling action on led fins 13 of led lighting unit 10.

In addition, outlet 24 surrounds fins 13. In this way, the risk of possible entry of water inside headlight 14 is strongly reduced.

Finally, it is apparent that modifications and variants not departing from the scope of protection of the claims may be made to motorcycle 1 and to the method disclosed therein.

In particular, motorcycle 1 could comprise only one rear wheel 4 and two front wheels 3, or two rear wheels 4 and only one rear wheel 3.

When two rear or front wheels 3, 4 are provided, they could be mounted in such a way to lean with respect to body 2.

Furthermore, led lighting unit 10 could form a separated kit to be mounted to support structure 9 of motorcycle 1, after having removed an existing lighting unit.

## Claims

1. A straddle type vehicle (1), in particular a motorcycle (1) comprising:
- a body (2) with a front portion (7);
- a head pipe (19); said front portion (7) being arranged frontward with respect to said head pipe (19);
- at least one fork (6) which is rotatably supported by said head pipe (19);
- a steering mechanism (5) supported at a top portion of said front fork (6); and at least one front wheel (3) supported at a bottom portion of said front fork (6);
- a frame (20); and
- a headlight (14) comprising at least one LED light source (11);
said headlight (14) further comprising a plurality of cooling fins (13) operatively connected to said LED light source (11) and adapted to dissipate the heat generated, in use, by the operation of said LED light source (11);
said front portion (7) comprising:
- a led lighting unit (10); and
- a support structure (9);
said fins (13) being interposed between said led lighting source (11) and said support structure (9); and
- an additional cover (50), which covers at least one portion of said supporting structure (9) or said led lighting unit (10);
said led lighting unit (10) comprising a conveying path (P) defined by a vane (25) between said frame (20) and said headlight (14); said conveying path (P) being open towards the outside of said led lighting unit (10) and being thermally coupled with said fins (13), so as to convey a cooling flow from the outside of said unit (10) towards said fins (13); said conveying path (P) comprising an outlet (24) being open towards said support structure (9);
**characterized by** comprising an air flow passage area (51) formed at said front portion (7) by said additional cover (50) which covers at least one portion of said supporting structure (9) or said led lighting unit (10);
said air flow passage area comprising, in turn,:
- an inlet (52) for the running wind mounted at the bottom part of said front portion (7); and
- an outlet (54) for said running wind mounted at the top part of said front portion (7).

2. The straddle type vehicle (1) of claim 1, **characterized in that** said frame (20) defines at least one inlet (23) and one outlet (24) of said conveying path (P);
said vane (25) at least partially engaged by said headlight (14) and in fluidic connection with said inlet (23) and said outlet (24).

3. The straddle type vehicle (1) of claim 2, **characterized in that** said inlet (23) is arranged on the side of said frame (20) opposite to said cooling fins (13), and **in that** said outlet (24) is arranged on the same side of said cooling fins (13).

4. The straddle type vehicle (1) of claim 3, **characterized in that** said frame (20) has a mid-plane (M); said inlets (23) being arranged on respective opposite sides of said mid-plane (M) .

5. The straddle type vehicle (1) of any one of claims 2 to 4, **characterized in that** said inlets (23) are elongated transversally to said mid-plane (M), extend symmetrically to said mid-plane (M) and converge towards said mid-plane (M).

6. The straddle type vehicle (1) of any one of claims 2 to 5, **characterized in that** said at least one outlet (24) surrounds said fins (13).

7. The straddle type vehicle (1) of claim 6, **characterized by** comprising a plurality of said outlets (24) surrounding respective groups (12) of said fins (13) and defining with said respective groups (12) respective passages (26) for said cooling flow.

8. The straddle type vehicle (1) of any one of the foregoing claims, **characterized in that** said frame (20) comprises, in turn,
- a front cover (21) which defines said inlet (23); and
- a rear cover (22) which defines said outlet (24);
said headlight (14) comprising a transparent element (15) facing said led lighting source (11) and enclosed at least in part by said front cover (21);
said front cover (21), said rear cover (22) and said transparent element (15) bounding said vane (25);
said front and rear cover (23, 24) being connected to one another and being connectable to said motorcycle (1).

9. The straddle type vehicle of any one of the foregoing claims, **characterized in that** a first cross-sectional area of said inlet (52) is smaller than a second cross-sectional area of said outlet (54).

10. A method of updating a straddle type vehicle (1), in particular a motorcycle (1); said straddle type vehicle (1) comprising:
- a body (2);
- at least one front wheel (3) and at least one rear wheel (4), which are rotatably mounted with respect to said body (2); and
- a front portion (7) comprising a support structure (9) and operatively connected to said front wheel (3);
**characterized by** comprising the step of releasably mounting a led lighting unit to said front portion (7) of a straddle-type vehicle (1) according to any one of the foregoing claims.

## Patentansprüche

1. Spreizsitz-Typ-Fahrzeug (1), insbesondere ein Motorrad (1), das aufweist:
- einen Körper (2) mit einem vorderen Abschnitt (7),
- ein Kopfrohr (19), wobei der vordere Abschnitt (7) mit Bezug auf das Kopfrohr (19) nach vorne gerichtet angeordnet ist,
- mindestens eine Gabel (6), die durch das Kopfrohr (19) rotierbar gestützt wird,
- einen Lenkmechanismus (5), der an einem oberen Abschnitt der vorderen Gabel (6) gestützt wird, und mindestens ein Vorderrad (3), das an einem Bodenabschnitt der vorderen Gabel (6) gestützt wird,
- einen Rahmen (20), und
- einen Scheinwerfer (14), der mindestens eine LED-Lichtquelle (11) aufweist,
wobei der Scheinwerfer (14) des Weiteren eine Vielzahl von Kühlrippen (13) aufweist, die operativ mit der LED-Lichtquelle (11) verbunden sind und angepasst sind, um die Wärme, die bei Verwendung durch den Betrieb der LED-Lichtquelle (11) erzeugt wird, abzuführen,
wobei der vordere Abschnitt (7) aufweist:
- eine LED-Beleuchtungseinheit (10), und
- eine Stützstruktur (9),
wobei die Rippen (13) zwischen der LED-Beleuchtungsquelle (11) und der Stützstruktur (9) zwischengeschaltet sind, und
- eine zusätzliche Abdeckung (50), die zumindest einen Abschnitt der Stützstruktur (9) oder der LED-Beleuchtungseinheit (10) abdeckt,
wobei die LED-Beleuchtungseinheit (10) einen Förderpfad (P) aufweist, der durch ein Luftleitblech (25) zwischen dem Rahmen (20) und dem Scheinwerfer (14) definiert wird, wobei der Förderpfad (P) zu der Außenseite der LED-Beleuchtungseinheit (10) hin offen ist und thermisch mit den Rippen (13) gekoppelt ist, um eine Kühlungsströmung von der Außenseite der Einheit (10) hin zu den Rippen (13) zu fördern, wobei der Förderpfad (P) einen Auslass (24) aufweist, der zu der Stützstruktur (9) hin offen ist,
**gekennzeichnet durch** Aufweisen eines Luftströmungsdurchgangsbereichs (51), der an dem vorderen Abschnitt (7) durch die zusätzliche Abdeckung (50), die zumindest einen Abschnitt der Kühlstruktur (9) oder der LED-Beleuchtungseinheit (10) bedeckt, gebildet ist,
wobei der Luftströmungsdurchgangsbereichs wiederum aufweist:
- einen Einlass (52) für den Fahrtwind, der an dem Bodenteil des vorderen Abschnitts (7) montiert ist, und
- einen Auslass (54) für den Fahrtwind, der an dem oberen Teil des vorderen Abschnitts (7) montiert ist.

2. Spreizsitz-Typ-Fahrzeug (1) nach Anspruch 1, das **dadurch gekennzeichnet ist, dass** der Rahmen (20) mindestens einen Einlass (23) und einen Auslass (24) des Förderpfads (P) definiert,
wobei das Luftleitblech (25) zumindest teilweise mit dem Scheinwerfer (14) in Eingriff ist und in Fluidverbindung mit dem Einlass (23) und dem Auslass (24) ist.

3. Spreizsitz-Typ-Fahrzeug (1) nach Anspruch 2, das **dadurch gekennzeichnet ist, dass** der Einlass (23) auf der Seite des Rahmens (20) entgegengesetzt zu den Kühlrippen (13) angeordnet ist und dass der Auslass (24) auf derselben Seite der Kühlrippen (13) angeordnet ist.

4. Spreizsitz-Typ-Fahrzeug (1) nach Anspruch 3, das **dadurch gekennzeichnet ist, dass** der Rahmen (20) eine Mittelebene (M) hat, wobei die Einlässe (23) auf jeweils entgegengesetzten Seiten der Mittelebene (M) angeordnet sind.

5. Spreizsitz-Typ-Fahrzeug (1) nach einem der Ansprüche 2 bis 4, das **dadurch gekennzeichnet ist, dass** Einlässe (23) quer zu der Mittelebene (M) länglich sind, sich symmetrisch zu der Mittelebene (M) erstrecken und zu der Mittelebene (M) hin konvergieren.

6. Spreizsitz-Typ-Fahrzeug (1) nach einem der Ansprüche 2 bis 5, das **dadurch gekennzeichnet ist, dass** der mindestens eine Auslass (24) die Rippen (13) umgibt.

7. Spreizsitz-Typ-Fahrzeug (1) nach Anspruch 6, das **dadurch gekennzeichnet ist, dass** es eine Vielzahl von den Auslässen (24) aufweist, die jeweilige Gruppen (12) von den Rippen (13) umgeben und die mit den jeweiligen Gruppen (12) jeweilige Durchgänge (26) für die Kühlungsströmung definieren.

8. Spreizsitz-Typ-Fahrzeug (1) nach einem der vorhergehenden Ansprüche, das **dadurch gekennzeichnet ist, dass** der Rahmen (20) wiederum aufweist:
- eine vordere Abdeckung (21), die den Einlass (23) definiert, und
- eine hintere Abdeckung (22), die den Auslass (24) definiert,
wobei der Scheinwerfer (14) ein transparentes Element (15) aufweist, das der LED-Beleuchtungsquelle (11) gegenüberliegt und zumindest teilweise durch die vordere Abdeckung (21) umschlossen ist,
wobei die vordere Abdeckung (21), die hintere Abdeckung (22) und das transparente Element (15) das Luftleitblech (25) begrenzen,
wobei die vordere und hintere Abdeckung (23, 24) miteinander verbunden sind und mit dem Motorrad (1) verbindbar sind.

9. Spreizsitz-Typ-Fahrzeug (1) nach einem der vorhergehenden Ansprüche, das **dadurch gekennzeichnet ist, dass** ein erster Querschnittsbereich von dem Einlass (52) kleiner als ein zweiter Querschnittsbereich von dem Auslass (54) ist.

10. Verfahren eines Aktualisierens eines Spreizsitz-Typ-Fahrzeugs (1), insbesondere eines Motorrads (1), wobei das eines Spreizsitz-Typ-Fahrzeug (1) aufweist:
- einen Körper (2),
- mindestens ein Vorderrad (3) und mindestens ein Hinterrad (4), die mit Bezug auf den Körper (2) rotierbar montiert sind, und
- einen vorderen Abschnitt (7), der eine Stützstruktur (9) aufweist und operativ mit dem Vorderrad (3) verbunden ist,
**gekennzeichnet durch** ein Aufweisen des Schritts eines lösbaren Montierens einer LED-Beleuchtungseinheit an den vorderen Abschnitt (7) eines Spreizsitz-Typ-Fahrzeugs (1) gemäß einem der vorhergehenden Ansprüche.

## Revendications

1. Véhicule de type à selle (1), en particulier une motocyclette (1) comprenant :
un corps (2) avec une partie avant (7) ;
une tubulure de refoulement (19) ; ladite partie avant (7) étant agencée vers l'avant par rapport à ladite tubulure de refoulement (19) ;
au moins une fourche (6) qui est supportée, en rotation, par ladite tubulure de refoulement (19) ;
un mécanisme de direction (5) supporté au niveau d'une partie supérieure de ladite fourche avant (6) ; et au moins une roue avant (3) supportée au niveau d'une partie inférieure de ladite fourche avant (6) ;
un cadre (20) ; et
un phare (14) comprenant au moins une source de lumière LED (11) ;
ledit phare (14) comprenant en outre une pluralité d'ailettes de refroidissement (13) raccordées, de manière opérationnelle, à ladite source de lumière LED (11) et adaptées pour dissiper la chaleur générée, à l'usage, par le fonctionnement de ladite source de lumière LED (11) ;
ladite partie avant (7) comprenant :
une unité de lumière LED (10) ; et
une structure de support (9) ;
lesdites ailettes (13) étant intercalées entre ladite source de lumière LED (11) et ladite structure de support (9) ; et
un couvercle supplémentaire (50) qui recouvre au moins une partie de ladite structure de support (9) ou ladite unité de lumière LED (10) ;
ladite unité de lumière LED (10) comprenant une trajectoire de transport (P) définie par une pale (25) entre ledit cadre (20) et ledit phare (14) ; ladite trajectoire de transport (P) étant ouverte vers l'extérieur de ladite unité de lumière LED (10) et étant thermiquement couplée avec lesdites ailettes (13), afin de transporter un flux de refroidissement de l'extérieur de ladite unité (10) vers lesdites ailettes (13) ; ladite trajectoire de transport (P) comprenant une sortie (24) ouverte vers ladite structure de support (9) ;
**caractérisé en ce qu'**il comprend une zone de passage d'écoulement d'air (51) formée au niveau de ladite partie avant (7) par ledit couvercle supplémentaire (50) qui recouvre au moins une partie de ladite structure de support (9) ou ladite unité de lumière LED (10) ;
ladite zone de passage d'écoulement d'air comprenant, à son tour :
une entrée (52) pour l'air circulant, montée sur la partie inférieure de ladite partie avant (7) ; et
une sortie (54) pour ledit air circulant, montée au niveau de la partie supérieure de ladite partie avant (7) .

2. Véhicule de type à selle (1) selon la revendication 1, **caractérisé en ce que** ledit cadre (20) définit au moins une entrée (23) et une sortie (24) de ladite trajectoire de transport (P) ;
ladite pale (25) au moins partiellement mise en prise par ledit phare (14) et en raccordement fluidique avec ladite entrée (23) et ladite sortie (24).

3. Véhicule de type à selle (1) selon la revendication 2, **caractérisé en ce que** ladite entrée (23) est agencée sur le côté dudit cadre (20) opposé auxdites ailettes de refroidissement (13), et **en ce que** ladite sortie (24) est agencée du même côté desdites ailettes de refroidissement (13).

4. Véhicule de type à selle (1) selon la revendication 3, **caractérisé en ce que** ledit cadre (20) a un plan médian (M) ; lesdites entrées (23) étant agencées sur des côtés opposés respectifs dudit plan médian (M).

5. Véhicule de type à selle (1) selon l'une quelconque des revendications 2 à 4, **caractérisé en ce que** lesdites entrées (23) sont allongées transversalement par rapport audit plan médian (M), s'étendent symétriquement par rapport au plan médian (M) et convergent vers ledit plan médian (M).

6. Véhicule de type à selle (1) selon l'une quelconque des revendications 2 à 5, **caractérisé en ce que** ladite au moins une sortie (24) entoure lesdites ailettes (13).

7. Véhicule de type à selle (1) selon la revendication 6, **caractérisé en ce qu'**il comprend une pluralité desdites sorties (24) entourant des groupes (12) respectifs desdites ailettes (13) et définissant avec lesdits groupes (12) respectifs, des passages (26) respectifs pour ledit flux de refroidissement.

8. Véhicule de type à selle (1) selon l'une quelconque des revendications précédentes, **caractérisé en ce que** ledit cadre (20) comprend à son tour :
un couvercle avant (21) qui définit ladite entrée (23) ; et
un couvercle arrière (22) qui définit ladite sortie (24) ;
ledit phare (14) comprenant un élément transparent (15) faisant face à ladite source de lumière LED (11) et enfermé au moins en partie par ledit couvercle avant (21) ;
ledit couvercle avant (21), ledit couvercle arrière (22) et ledit élément transparent (15) délimitant ladite pale (25) ;
lesdits couvercles avant et arrière (23, 24) étant raccordés l'un à l'autre et pouvant se raccorder à ladite motocyclette (1).

9. Véhicule de type à selle (1) selon l'une quelconque des revendications précédentes, **caractérisé en ce qu'**une première zone transversale de ladite entrée (52) est inférieure à une seconde zone transversale de ladite sortie (54).

10. Procédé pour moderniser un véhicule de type à selle (1) en particulier une motocyclette (1) ; ledit véhicule de type à selle (1) comprenant :
un corps (2) ;
au moins une roue avant (3) et au moins une roue arrière (4) qui sont montées en rotation par rapport audit corps (2) ; et
une partie avant (7) comprenant une structure de support (9) et raccordée, de manière opérationnelle, à ladite roue avant (3) ;
**caractérisé en ce qu'**il comprend l'étape consistant à monter, de manière amovible, une unité de lumière LED sur ladite partie avant (7) d'un véhicule de type à selle (1) selon l'une quelconque des revendications précédentes.
